(19) Europäisches Patentamt
European Patent Office
Office européen des brevets

(11) EP 2 141 197 B1

(12) # EUROPEAN PATENT SPECIFICATION

(45) Date of publication and mention of the grant of the patent:
**25.05.2011 Bulletin 2011/21**

(21) Application number: **08159391.5**

(22) Date of filing: **01.07.2008**

(51) Int Cl.:
***C08K 13/02*** *(2006.01)*
*C08K 5/00* *(2006.01)*
*C08K 5/134* *(2006.01)*
*C08K 5/49* *(2006.01)*
*C08K 3/34* *(2006.01)*
*C08K 5/13* *(2006.01)*
*C08K 5/20* *(2006.01)*

(54) **Polypropylene composition with improved properties**

Polypropylenzusammensetzung mit verbesserten Eigenschaften

Composition de polypropylène dotée de propriétés améliorées

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**06.01.2010 Bulletin 2010/01**

(73) Proprietor: **Borealis AG**
**1220 Vienna (AT)**

(72) Inventors:
- **Grünberger, Manfred**
**4040 Linz (AT)**
- **Wolfschwenger, Johannes**
**4491 Niederneukirchen (AT)**

(74) Representative: **Lux, Berthold**
**Maiwald Patentanwalts GmbH**
**Elisenhof**
**Elisenstraße 3**
**80335 München (DE)**

(56) References cited:
**EP-A- 0 407 198 US-A1- 2006 074 174**

- **DATABASE CA [Online] CHEMICAL ABSTRACTS SERVICE, COLUMBUS, OHIO, US; SAKAIZAWA, MASAO ET AL: "Inorganic filler-reinforced propylene polymer resin compositions" XP002505581 retrieved from STN Database accession no. 1996:628411 -& JP 08 199015 A (TONEN KAGAKU KK, JAPAN) 6 August 1996 (1996-08-06)**
- **DATABASE CA [Online] CHEMICAL ABSTRACTS SERVICE, COLUMBUS, OHIO, US; DAI, KANG: "polypropylene insulation foam used in radio-frequency concentric cables" XP002505605 retrieved from STN Database accession no. 2007: 355149 -& CN 1 935 890 A (CHENGDU PUTIAN TELECOMMUNICATIONS CABLE CO., LTD., PEOP. REP. CHINA) 28 March 2007 (2007-03-28)**
- **DATABASE CA [Online] CHEMICAL ABSTRACTS SERVICE, COLUMBUS, OHIO, US; MAEDA, MASANORI: "Fireproofed polypropylene molding materials with good prevention of bleed out and discoloration and moldings thereof" XP002505606 retrieved from STN Database accession no. 1997:293935 -& JP 09 052988 A (MATSUSHITA ELECTRIC WORKS LTD, JAPAN) 25 February 1997 (1997-02-25)**
- **DATABASE CA [Online] CHEMICAL ABSTRACTS SERVICE, COLUMBUS, OHIO, US; SAITO, KOICHI ET AL: "Inorganic filler-reinforced polypropylene compositions with resistance to degradation" XP002505607 retrieved from STN Database accession no. 1990:21866 -& JP 01 188543 A (CHISSO CORP., JAPAN) 27 July 1989 (1989-07-27)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 141 197 B1

## Description

The present invention relates a new polypropylene composition comprising organic antioxidants and the use of organic metal deactivators in such compositions.

Polypropylene is the material of choice for many applications. For instance polypropylene in combination with talc is used as back sheets of blister packaging as well as in articles in the automotive interior. Said polypropylene/talc compositions are - generally speaking - good processable and can be individually customized. However such materials must also provide long term stability against environmental impacts, like oxidative degradation, keeping the tailored properties of the polypropylene/talc composition on the desired level. Accordingly antioxidants are added to impair the degradation of the polypropylene/talc compositions. However the antioxidants themselves may be instable under specific environmental stresses, which might lead also to malodour. Over the last years the standard requirements for long term stability have been even steadily tightened, which in turn increased the amounts of additives to satisfy the ambitioned desires, like heat resistance and/or mechanical properties. On the other hand such an increasing amount of additives intensifies the risk of side reactions. Such side reactions, in particular in cases where degradation of antioxidants is involved, lead to side products being quite often volatile. Of course volatile compounds should be kept on low levels in particular as they are not accepted by the customers.

Thus the object of the present invention is to reduce the amount of volatile compounds, in particular of volatile compounds in polypropylene compositions comprising talc and organic antioxidants. There is in particular the desire to reduce the amount of headspace emission according to VDA 277.

The first finding of the present invention is that the amount of volatile compounds is mainly based on the rather rapid degradation of the organic antioxidants. The second finding of the present invention is that the degradation of the antioxidants can be suppressed by chelating agents.

Thus the present invention is directed to a polymer composition comprising

(a) polypropylene (A)
(b) talc (B)
(c) phenolic antioxidants (C),
(d) organic metal deactivators (D), and
(e) optionally phosphorous antioxidants (E).

wherein the polypropylene (A) in a heterophasic propylene copolymer (A') comprising a polypropylene matrix ($A^1$) and an amosphous elastomer ($A^2$).

Alternatively and preferably the invention is directed to a polymer composition comprising polypropylene (A) and additionally

(a) 1,000 to 550,000 ppm of talc (B),
(b) 100 to 5,000 ppm of phenolic antioxidants (C),
(c) 100 to 5,000 ppm organic metal deactivators (D), and
(d) optionally 100 to 5,000 ppm of phosphorous antioxidants (E), based on the total composition.

As usual 1 ppm of additive corresponds to 1 mg additive in 1 kg composition.

Surprisingly it has been found out that the above defined composition show significant reduction in headspace emission, in particular show significant reduction of 2-methyl-1-propene, compared with polypropylene compositions comprising talc and organic antioxidants but no organic metal deactivators (see table 1). Such a reduced headspace emission is accomplished with the organic metal deactivators but not with other possible candidates like, magnesium hydroxide or anthracene.

In the following the present invention is described in more detail.

The polypropylene (A) is a heterophasic propylene copolymer (A'). Heterophasic polypropylene systems are well known in the art and are systems in particular obtained in an at least two step process resulting in a multiphase structure comprising a polypropylene matrix ($A^1$), preferably an isotactic polypropylene matrix ($A^1$), and inclusions dispersed therein comprising amorphous elastomer ($A^2$). Such systems can be easily tailored for the requirements needed by setting the comonomer content in the polypropylene matrix ($A^1$) and in the amorphous elastomer ($A^2$) respectively. Such a heterophasic propylene copolymer (A') may have an $MFR_2$ in the range of 2.0 to 80.0 g/10min, more preferably in the range of 5.0 to 50.0 g/10min, still more preferably in the range of 7.0 to 20.0 g/10min. Typically such a heterophasic propylene copolymer (A') has an amorphous elastomer ($A^2$) being a propylene-ethylene rubber (EPR) ($A^2$). The polypropylene matrix ($A^1$) can be either a propylene homopolymer or a propylene copolymer, wherein the latter is especially preferred. The total comonomer, preferably ethylene, content is in the range of 2 to 25 wt.-% based on the total heterophasic propylene copolymer (A'). The amount of xylene solubles may be in the range of 10 to 40 wt.-%, preferably 15

to 30 wt.-%.

Of course the polypropylene (A) may additionally comprise beside the heterophasic propylene copolymer (A') a high density polyethylene (HDPE) having for instance a density in the range of 0.954 to 0.966 g/cm$^3$ and a melt flow rate ($MFR_2$ at 190 °C) of 0.1 to 15.0 g/10min. Further the polypropylene (A) may also comprise additionally EPR, propylene-ethylene copolymers and/or ethylene-octene copolymers.

It is however preferred that the polypropylene (A) is the only polymer component in the inventive polymer composition.

Preferably the polypropylene (A) is present in the inventive composition in the amount of at least 50.0 wt.-% , more preferably at least 60.0 wt.-%, yet more preferably at least 70.0 wt.-%, still more preferably of at least 75.0 wt.-%.

Beside the polypropylene the invention is in particular defined by its additives.

Accordingly to be useful in the above mentioned applications the inventive polymer composition must comprise tale (B). Talc (B) is usually used to support the crystallization behaviour of the polymer material. It can be also employed as a shrinkage reducing additive and/or reinforcing agent. In any case talc (B) has been recognized in the above mentioned applications as an indispensable part of polypropylene compositions. Talc (B) is a mineral composed of hydrated magnesium silicate and may comprise low amounts of residues, like iron oxide (FeO) and/or iron silicate. Generally the amounts of residues do not exceed 5.0 wt.-%. Thus it is preferred that the talc (B) comprise 0.1 to 3.5 wt.-%, more preferably 0.1 to 3.0 wt.-%, residues, i.e. residues comprising iron, like iron oxide or iron silicate. Of course talc (B) may also be a chlorite-talc as the commercial product "Steamic T1 C A" of Luzenac.

Preferably the talc (B) according to this invention has a particle size (d50%) of below 3.0 μm (d50% indicates that 50 wt-% of the talc has a particle size below 3.0 μm) and/or a particle size (d98%) of below 15.0 μm (d98% indicates that 98 wt-% of the talc has a particle size below 15.0 μm), more preferably a particle size (d50%) of below 2.0 μm and/or a particle size (d98%) of below 10.0 μm, yet more preferably a particle size (d50%) of below 1.0 μm and/or a particle size (d98%) of below 5.0 μm.

As further additives organic antioxidants (C) are required. Antioxidants are needed to impair oxidative degradation of the polypropylene. However the antioxidants themselves may be instable in case they come in contact with other additives. In the present case it has been observed that the organic antioxidants are rather quickly degraded in a polypropylene composition comprising talc. The degradation of the organic oxidants can be very easily deducted in the headspace emission according to VDA 277. The emission spectrum shows degradation products (for instance 2-methyl-1-propene) originating from the organic antioxidants. Such degradation products are undesired. Without to be bond on the theory, the degradation of the organic antioxidants may be catalyzed due to the presence of the talc and/or its residues dispersed therein. On the other hand one can neither abstain from talc nor from organic antioxidants in the desired applications, since this would deteriorate the other properties of the polymer composition needed in the technical fields as defined in the instant invention. Thus as stated above organic antioxidants (C) must be present in the inventive polymer composition.

The organic antioxidants (C) are phenolic antioxidants (C').

The term "phenolic antioxidant" (C') as used in the instant invention stands for any compound capable of slowing or preventing the oxidation of the polymer component, i.e. the polypropylene. Additionally such a phenolic antioxidant (C') must of course comprise a phenolic residue.

Better results can be achieved in case the phenolic antioxidants (C') are sterically hindered. The term "Sterically hindered" according to this invention means that the hydroxyl group (HO-) of the phenolic antioxidants (C') is surrounded by sterical alkyl residues.

Accordingly the phenolic antioxidants (C') preferably comprise the residue of formula (1)

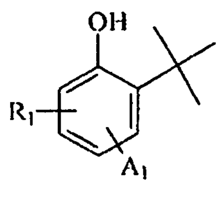

(I)

wherein

$R_1$ being located at the ortho- or meta-position to the hydroxyl-group and $R_1$ is $(CH_3)_3C$-, $CH_3$- or H, preferably $(CH_3)_3C$-, and

$A_1$ constitutes the remaining part of the phenolic antioxidant (C') and is preferably located at the para-position to the hydroxyl-group.

Preferably the phenolic antioxidants (C') preferably comprise the residue of formula (Ia)

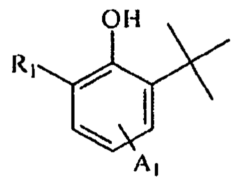

(Ia)

wherein
$R_1$ is $(CH_3)_3C$-, $CH_3$- or H, preferably $(CH_3)_3C$-, and
$A_1$ constitutes the remaining part of the phenolic antioxidant (C').

Preferably $A_1$ is in para-position to the hydroxyl-group.

Additionally the phenolic antioxidants (C') shall preferably exceed a specific molecular weight. Accordingly the phenolic antioxidants (C') have preferably a molecular weight of more than 785 g/mol, more preferably more than 1100 g/mol. On the other hand the molecular weight should be not too high, i.e. not higher than 1300 g/mol. A preferred range is from 785 to 1300 g/mol, more preferably from 1000 to 1300 g/mol, yet more preferably from 1100 to 1300 g/mol.

Further the phenolic antioxidants (C') can be additionally defined by the amount of phenolic residues, in particular by the amount of phenolic residues of formula (I) or (Ia). Accordingly the phenolic antioxidants (C') may comprise(s) 1, 2, 3, 4 or more phenolic residues, preferably 1, 2, 3, 4 or more phenolic residues of formula (I) or (Ia).

Moreover the phenolic antioxidants (C') comprise mainly only carbon atoms, hydrogen atoms and minor amounts of O-atoms, mainly caused due to the hydroxyl group (HO-) of the phenolic residues. However the phenolic antioxidants (C') may comprise additionally minor amounts of N, S and P atoms. Preferably the phenolic antioxidants (C') are constituted by C, H, O, N and S atoms only, more preferably the phenolic antioxidants (C') are constituted by C, H and O only.

As stated above the phenolic antioxidants (C') shall have a rather high molecular weight. A high molecular weight is an indicator for several phenolic residues. Thus it is in particular appreciated that the phenolic antioxidants (C') have 4 or more, especially 4, phenolic residues, like the phenolic residue of formula (I) or (Ia).

As especially suitable phenolic antioxidants (C') have been recognized compounds comprising at least one residue of formula (II)

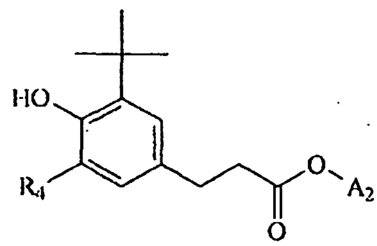

(II)

wherein
$R_4$ is $(CH_3)_3C$-, $CH_3$-, or H, preferably $(CH_3)_3C$-, and
$A_2$ constitutes the remaining part of the phenolic antioxidant (C').

Considering the above requirements the phenolic antioxidants (C') are preferably selected from the group consisting of
2,6-di-tert-butyl-4-methylphenol (CAS no. 128-37-0; M 220 g/mol), pentaerythrityl-tetrakis (3-(3,5-di-tert-butyl-4-hydroxyphenyl) propionate (CAS no. 6683-19-8; M 1178 g/mol),
octadecyl 3-(3',5'-di-tert-butyl-4-hydroxyphenyl)propionate (CAS no. 2082-79-3; M 531 g/mol)
1,3, 5-trimethyl-2,4,6-tris-(3,5-di-tert-butyl-4-hydroxybenxyl) benzene (CAS no. 1709-70-2; M 775 g/mol),
2,2'-thiodiethylenebis (3,5-di-tert.-butyl-4-hydroxyphenyl) propionate (CAS no. 41484-35-9; M 643 g/mol),
calcium bis(ethyl 3,5-di-tert-butyl-4-hydroxybenzylphosphonate) (CAS no. 65140-91-2; M 695 g/mol),
1,3,5-tris(3',5'-di-tert. butyl-4'-hydroxybenzyl)-isocyanurate (CAS no. 27676-62-6, M 784 g/mol),
1,3,5-tris(4-tert. butyl-3-hydroxy-2,6-dimethylbenzyl)-1,3,5-triaxine-2,4,6-(1H,3H,5H)-trione (CAS no. 40601-76-1, M

813 g/mol),
bis(3,3-bis(3'-tert-butyl-4'-hydroxyphenyl)butanic acid) glycolester (CAS no. 32509-66-3; M 794 g/mol),
4,4'-Thiobis(2-tert-butyl-5-methylphenol) (CAS no. 96-69-5; M 358 g/mol), 2,2'-methylene-bis-(6-(1-methyl-cyclohexyl)-para-cresol) (CAS no. 77-62-3; M 637 g/mol),
3,3'-Bis(3,5-di-tert-butyl-4-hydroxyphenyl)-N,N'-hexamethylenedipropionamide (CAS no. 23128-74-7; M 637 g/mol),
2,5,7,8-tetramethyl-2-(4',8',12'-trimethyltridecyl)-chroman-6-ol (CAS no. 10191-41-0; M 431 g/mol),
2,2-ethylidenebis (4,6-di-tert-butylphenol) (CAS no. 35958-30-6; M 439 g/mol), 1,1,3-tris(2-methyl-4-hydroxy-5'-tert-butylphenyl) butane (CAS no. 1843-03-4; M 545 g/mol),
3,9-bis(1,1-dimethyl-2-(beta-(3-tert-butyl-4-hydroxy-5-methylphenyl)propionyloxy)ethyl)-2,4,8,10-tetraoxaspiro[5.5]undecane (CAS no. 90498-90-1; M 741 g/mol),
1,6-hexanediyl-bis(3,5-bis(1,1dimethylethyl)-4-hydroxybenzene)propanoate) (CAS no. 35074-77-2; M 639 g/mol),
2,6-di-tert-bulyl-4-nonylphenol (CAS no. 4306-88-1; M 280 g/mol),
4,4'-butylidenebis(6-tert-butyl-3-methylphenol (CAS no. 85-60-9; M 383 g/mol);
2,2'-methylene bis(6-tert-butyl-4-methylphenol) (CAS no. 119-47-1; M 341 g/mol), triethylenglycol-bis-(3-tert-butyl-4-hydroxy-5-methylphenyl) propionate (CAS no. 36443-68-2; M 587 g/mol),
a mixture of C13 to C15 linear and branched alkyl esters of 3-(3',5'-di-t-butyl-4'-hydroxyphenyl) propionic acid (CAS no. 171090-93-0; $M_w$ 485 g/mol), 6,6'-di-tert-butyl-2,2'-thiodip-cresol (CAS no. 90-66-4; M 359 g/mol), diethyl-(3,5-di-tert-butyl-4-hydroxybenzyl) phosphate (CAS no. 976-56-7; M 356 g/mol),
4,6-bis (octylthiomethyl)-o-cresol (CAS no. 110553-27-0; M 425 g/mol), benzenepropanoic acid, 3,5-bis(1,1-dimehtyl-ethyl)-4-hydroxy-,C7-C9-branched and linear alkyl esters (CAS no. 125643-61-0; $M_w$ 399 g/mol),
1,1,3-tris[2-methyl-4-[3-(3,5-di-tert-butyl-4-hydroxyphenyl)propionyloxy]-5-tert-butylphenyl]butane (CAS no. 180002-86-2; M 1326 g/mol),
mixed styrenated phenols (M ca 320 g/mol; CAS no. 61788-44-1; M ca. 320 g/mol), butylated, octylated phenols (M ca 340 g/mol; CAS no. 68610-06-0; M ca 340 g/mol), and
butylated reaction product of p-cresol and dicyclopentadiene ($M_w$ 700 to 800 g/mol; CAS no. 68610-51-5; $M_w$ 700 - 800 g/mol).

More preferably the phenolic antioxidants (C') are selected from the group consisting of
pentaerythrityl-tetrakis (3-(3,5-di-tert-butyl-4-hydroxyphenyl) propionate (CAS no. 6683-19-8; M 1178 g/mol),
octadecyl 3-(3',5'-di-tert-butyl-4-hydroxyphenyl)propionate (CAS no. 2082-79-3; M 531 g/mol)
bis(3,3-bis(3'-tert-butyl-4'-hydroxyphenyl)butanic acid) glycolester (CAS no. 32509-66-3; M 794 g/mol),
3,3'-Bis(3,5-di-tert-butyl-4-hydroxyphenyl)-N,N'-hexamethylenedipropionamide (CAS no. 23128-74-7; M 637 g/mol),
3,9-bis(1,1-dimethyl-2-(beta-(3-tert-butyl-4-hydroxy-5-methylphenyl)propionyloxy)ethyl)-2,4,8,10-tetraoxaspiro[5.5]undecane (CAS no. 90498-90-1; M 741 g/mol),
1,6-hexanediyl-bis(3,5-bis(1,1dimethylethyl)-4-hydroxybenzene)propanoate) (CAS no. 35074-77-2; M 639 g/mol),
triethylenglycol-bis-(3-tert-butyl-4-hydroxy-5-methylphenyl) propionate (CAS no. 36443-68-2; M 587 g/mol),
a mixture of C13 to C15 linear and branched alkyl esters of 3-(3',5'-di-t-butyl-4'-hydroxyphenyl) propionic acid (CAS no. 171090-93-0; $M_w$ 485 g/mol), and benzenepropanoic acid, 3.5-bis(1,1-dimehtyl-ethyl)-4-hydroxy-,C7-C9-branched and linear alkyl esters (CAS no.125643-61-0; $M_w$ 399 g/mol),

The most preferred phenolic antioxidant (C') is pentaerythrityl-tetrakis (3-(3,5-di-tert-butyl-4-hydroxyphenyl) propionate (CAS no. 6683-19-8; M 1178 g/mol) preferably having the formula (III)

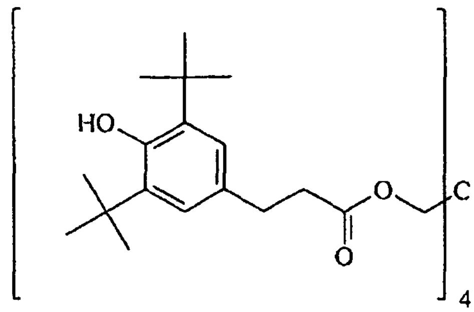

(III)

The present inventive polymer composition may comprise different organic antioxidants (C), like phenolic antioxidants (C'), as defined in the instant invention, however it is preferred that it comprises only one type of organic antioxidant (C), like phenolic antioxidant (C'), as defined herein.

The present polymer composition can additionally comprise in addition to the organic antioxidants (C) one or more phosphorous antioxidants (E). More preferably the polypropylene composition comprises only one type of phosphorous antioxidant (E). Preferred phosphorous antioxidants (E) are selected from the group consisting of tris-(2,4-di-tert-butylphenyl) phosphite (CAS no. 31570-04-4; M 647 g/mol), tetrakis-(2,4-di-tert-butylphenyl)-4,4'-biphenylen-di-phosphonile (CAS no. 38613-77-3; M 991 g/mol),
bis-(2,4-di-tert-butylphenyl)-pentaerythrityl-di-phosphite (CAS no. 26741-53-7; M 604 g/mol),
di-stearyl-pentaerythrityl-di-phosphite (CAS no. 3806-34-6; M 733 g/mol),
tris-nonylphenyl phosphite (CAS no. 26523-78-4; M 689 g/mol), bis(2,6-di-tert-butyl-4-methylphenyl)pentaerythrityl-di-phosphite (CAS no. 80693-00-1; M 633 g/mol),
2,2'-methylenebis (4,6-di-tert-butylphenyl) octyl-phosphite (CAS no. 126050-54-2; M 583 g/mol),
1,1,3-tris (2-methyl-4-ditridecyl phosphite-5-tert-butylphenyl) butane (CAS no. 68958-97-4; M 1831 g/mol),
4,4'-butylidenebis (3-methyl-6-tert-butylphenyl-di-tridecyl) phosphite (CAS no. 13003-12-8; M 1240 g/mol),
bis-(2,4-dicumylphenyl)pentaerythritol diposphite (CAS no. 154862-43-8; M 852 g/mol),
bis(2-methyl-4,6-bis(1,1-dimethylethyl) phenyl) phosphorous acid ethylester (CAS no. 145650-60-8; M 514 g/mol),
2,2',2''-nitrilo triethyl-tris(3,3',5,5'-tetra-tert-butyl-1,1'-biphenyl-2,2'-diyl)phosphite) (CAS no. 80410-33-9; M 1465 g/mol)
2,4,6-tris(tert-butyl)phenyl-2-butyl-2-ethyl-1,3-propandiolphosphit (CAS no. 161717-32-4, M 450 g/mol),
2,2'-ethyliden-bis(4,6-di-tert-butylphenyl)fluorphosphonit (CAS no. 118337-09-0; M 487 g/mol),
6-(3-(3-tert-butyl-4-hydroxy-5-methylphenyl)propoxy)-2,4,8,10-tetra-tert-butyldibenz[d,f][1.3.2]dioxaphosphepin (CAS no. 203255-81-6; M 660 g/mol), tetrakis-(2,4-di-tert-butyl-5-methylphenyl)-4,4'-biphenylen-di-phosphite (CAS no. 147192-62-9; M 1092 g/mol), and
1,3-bis-(diphenylphosphino)-2,2-dimethylpropane (CAS no. 80326-98-3; M 440.5 g/mol).

Especially suitable are organic phosphites, in particular those as defined in the above list, as phosphorous antioxidants (E).

The most preferred phosphorous antioxidant (E) is tris-(2,4-di-tert-butylphenyl) phosphite (CAS no. 31570-04-4; M 647 g/mol).

As stated above known polypropylene compositions comprising talc and organic antioxidants suffer from a rather quick degradation of the antioxidants. Such quick degradation - without be bonded on this theory - may be caused by the presence of talc and more importantly by the residues within in the talc. These residues may catalyse the degradation of the organic antioxidants. Thus, any means which may impede the catalytic activity of talc and/or its residues in view of the organic antioxidants reduces the degradation process and associated therewith minimises the headspace emission. It has been in particular discovered that organic metal deactivators are in particular useful. Organic metal deactivators (D) according to this invention are preferably additives stabilizing compounds by deactivating metal ions, introduced by talc and/or other additives in the polymer composition. Accordingly in the broadest sense the organic metal deactivators (D) are complexing agents that deactivate or reduce the ability of metal ions, like iron ions, to initiate or catalyze the degradation of a polymer or of an additive part of a polymer composition (IUPAC, 1996). Thus it is preferred that the organic metal deactivators (D) comprise at least one, preferably, two -C(O)-NH- groups. Even more preferred the organic metal deactivators (D) comprise the group of formula (IV)

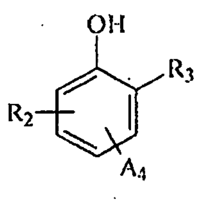

(IV)

wherein
$R_2$ being located at the ortho- or meta-position to the hydroxyl-group and $R_2$ and $R_3$ are independently selected from the group consisting of $(CH_3)_3C$-, $CH_3$- or H-, preferably $(CH_3)_3C$-, and
$A_4$ constitutes the remaining part of organic metal deactivators (D) and comprises at least one, preferably, two -C(O)-NH- groups.

In particular the organic metal deactivators (D) comprise the group of formula (IVa)

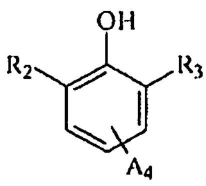

(IVa)

wherein
$R_2$ and $R_3$ arc independently selected from the group consisting of $(CH_3)_3C$-, $CH_3$- or H-, preferably $(CH_3)_3C$-, and
$A_4$ constitutes the remaining part of organic metal deactivators (D) and comprises at least one, preferably, two -C(O)-NH- groups.

It is in particular preferred that the organic metal deactivators (D) comprise two phenolic residues, preferably as defined by formula (IV) or (IVa), which are linked via a bridging group, wherein said group comprises two -C(O)-NH- groups.

Accordingly it is appreciated that the organic metal deactivators (D) are of the formula (V-a) or (V-b), wherein formula (V-a) is defined as follows:

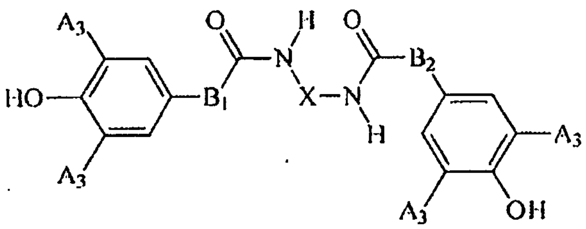

(V-a)

wherein
"$A_3$" are independently selected from the group consisting of $(CH_3)_3C$-, $CH_3$- or H-, preferably $(CH_3)_3C$-, and
"$B_1$" and "$B_2$" are independently selected from the group consisting of $-(CH_2)-$, - $(CH_2)_2$- and single bond, and
"X" is a single bond or an aliphatic chain, wherein the aliphatic chain

(a) consists of 2 to 10 $-(CH_2)-$ units or
(b) comprises

(i) 2 to 10 $-(CH_2)-$ units, and
(ii) at least one, preferably two, -CO-NH- units or a residue of formula (VI)

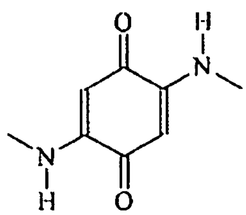

(VI),

and formula (V-b) is defined as follows:

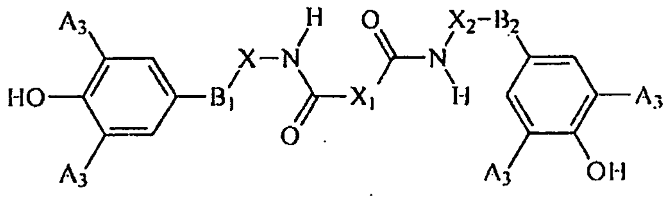

(V-b)

wherein
"$A_3$" are independently selected from the group consisting of $(CH_3)_3C$-, $CH_3$- or H-, preferably $(CH_3)_3C$-, and
"$B_1$" and "$B_2$" are independently selected from the group consisting of -$(CH_2)$-, $(CH_2)_2$-, -CH=, -CO-, and single bond,
"X" and "$X_2$" are independently selected from the group consisting of =N-, -NH-, - CO-O-$CH_2$-$CH_2$- and single bond, and
"$X_1$" is selected from the group consisting of a single bond and 2 to 10 -$(CH_2)$- units, with the proviso that $B_1$, $B_2$, X, $X_1$, $X_2$ cannot be simultaneously single bonds.

Especially preferred organic metal deactivators (D) are selected from the group consisting of N,N'-bis (3(3',5'-di-tert. butyl-4'-hydroxyphenyl)propionyl) hydrazine (CAS-no 32687-78-8), 2,2'-oxamido bis-(ethyl-3-('3,5-di-tert. butyl-4-hydroxyphenyl)propionate) (CAS-no 70331-94-1), oxalyl bis(benzylidenehydraxide) (CAS-no 6629-10-3), 2,5-bis (2-(3-(3,5-di-tert. butyl-4-hydroxyphenyl) propionylamido)ethylamino) benzoquinone, tris(2-tert. butyl-4-thio(2'-methyl-4'-hydroxy-5'-tert. butyl)phenyl-5-methyl) phenylphosphite (CAS-no 36339-47-6), and decamathylene-dicarboxy-di-salicyloyl hydrazide (CAS-no 63245-38-5). The most preferred organic metal deactivators (D) are N,N'-bis (3(3',5'-di-tert. butyl-4'-hydroxyphenyl)propionyl) hydrazine (CAS-no 32687-78-8) and/or 2,2'-oxamido bis-(ethyl-3-(3,5-di-tert. butyl-4-hydroxyphenyl)propionate) (CAS-no 70331-94-1).

The present inventive polymer composition may comprise different organic metal deactivators (D) as defined in the instant invention, however it is preferred that it comprises only one type of organic metal deactivator (D) as defined herein.

To obtain especially good results the components of the polymer composition of the instant invention should be present in specific amounts.

Accordingly it is appreciated that polymer composition comprises

(a) at least 50 wt.-%, preferably at least 60 wt.-%, more preferably at least 70 wt.-% polypropylene (A), like heterophasic propylene copolymer (A'),
(b) 1,000 to 550,000 ppm, preferably 50,000 to 500,000 ppm, more preferably 100,000 to 400,000 ppm, yet more preferably 150,000 to 300,000 ppm, of talc (B),
(c) 100 to 5,000 ppm, preferably 500 to 5,000 ppm, more preferably 500 to 3,000 ppm, yet more preferably 200 to 1,000 ppm, of phenolic antioxidants (C), like pentaerythrityl-tetrakis (3-(3,5-di-tert-butyl-4-hydroxyphenyl) propionate (CAS no. 6683-19-8; M 1178 g/mol),
(d) 100 to 5,000 ppm, preferably 500 to 5,000 ppm, more preferably 500 to 3,000 ppm, yet more preferably 800 to 3,000 ppm, organic metal deactivators (D), like N,N'-bis (3(3',5'-di-tert. butyl-4'-hydroxyphenyl)propionyl) hydrazine (CAS-no 32687-78-8) and/or 2,2'-oxamido bis-(ethyl-3-(3,5-di-tert. butyl-4-hydroxyphenyl)propionate) (CAS-no 70331-94-1), and
(e) optionally 100 to 5,000 ppm, preferably500 to 3,000 ppm, more preferably 500 to 1,500 ppm, yet more preferably 1,000 to 1,500 ppm, of phosphorous antioxidants (E), like tris-(2,4-di-tert-butylphenyl) phosphite (CAS no. 31570-04-4; M 647 g/mol),

based on the polypropylene composition.

Of course the present invention may comprise further additives like calcium stearate and/or pigments, for instance in the form of a master batch.

The polymer composition according to this invention is obtained by extruding the polymer and thereby adding the additives as mentioned in the instant invention. Preferably a twin-screw extruder is used, like the twin-screw extruder ZSK40. The polymer composition pelletized with the twin-screw extruder ZSK 40 is used in the headspace emission test according to VDA 277.

The present invention is additionally directed to the use of the inventive polymer composition as a covering element for vehicles and/or back sheets of blister packaging, in particular to reduce the headspace emission according to VDA 277.

Furthermore the present invention is directed to articles, preferably automotive articles, more preferably automotive interior articles, like dashboards, door claddings, armrests or other interior trims, comprising the polymer composition as defined herein. The invention is further directed to blister packaging, in particular to the back sheets of blister packaging, comprising the polymer composition of the instant invention.

Finally the present invention is directed to the use of organic metal deactivators (D) as defined in the instant invention to reduce the headspace emission according to VDA 277, in particular to reduce the emission of 2-methyl-1-propene according to VDA 277, of a polymer composition, preferably of a polymer composition comprising talc, more preferably of a polymer composition comprising talc and organic antioxidants. Thus the present invention is in particular directed to the use of organic metal deactivators (D) as defined in the instant invention to reduce the headspace emission according to VDA 277, in particular to reduce the emission of 2-methyl-1-propene according to VDA 277, of a polymer composition comprising talc (B) and antioxidants (C) as defined in the instant invention but no organic metal deactivators (D). Accordingly the use of the organic metal deactivators (D) in the polymer composition as defined in the instant invention shall reduce the headspace emission according VDA 277, in particular shall reduce the emission of 2-methyl-1-propene according to VDA 277, of at least 30 %, preferably of at least 40 %, yet more preferably of at least 45 %, wherein the percentage is defined as follows:

$$\% = \left(1 - \left[\frac{(\mu gC/g) \text{ of a polymer composition comprising an organic metal deactivator}}{(\mu gC/g) \text{ of the same polymer composition but without organic metal deactivator}}\right]\right) * 100.$$

The present invention is further described by way of examples.

## EXAMPLES

1. The following definitions of terms and determination of methods apply for the above general description of the invention as well as to the below examples unless otherwise defined.

**Molecular weights, molecular weight distribution (Mn, Mw, MWD)** Mw/Mn/MWD are measured by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**$MFR_2$ (230 °C)** is measured according to ISO 1133 (230 °C, 2.16 kg load).

**$MFR_2$ (190 °C)** is measured according to ISO 1133 (190 °C, 2.16 kg load).

**Ethylene content** is measured with Fourier transform infrared spectroscopy (FTIR) calibrated with $^{13}C$-NMR. When measuring the ethylene content in polypropylene, a thin film of the sample (thickness about 250 μm) was prepared by hot-pressing. The area of absorption peaks 720 and 733 $cm^{-1}$ was measured with Perkin Elmer FTIR 1600 spectrometer. The method was calibrated by ethylene content data measured by $^{13}C$-NMR.

**Particle size** is measured according to ISO 13320-1:1999

**The xylene solubles (XS, wt.-%):** Content of Xylene solubles (XS) is determined at 23 °C according ISO 6427.

**VDA 277 (available for instance from "Dokumentation Kraftfahrwesen (DKF); Ulrichstraβe 14, 74321 Bietigheim Bissingen)**

The content of volatiles is determined according to VDA 277:1995 using a gas chromatography (GC) device with a WCOT-capillary column (wax type) of 0.25 mm inner diameter and 30 m length. The GC settings were as follows: 3 minutes isothermal at 50 °C, heat up to 200 °C at 12 K/min, 4 minutes isothermal at 200 °C, injection-temperature: 200 °C, detection-temperature: 250 °C, carrier helium, flow-mode split 1:20 and average carrier-speed 22 - 27 cm/s.

In addition to the FID detector for the summary volatile evaluation a MS detector is used for the evaluation of the single volatile components. A specific Quadropol MS was used with the following settings: 280 °C transfer-line temperature, scan method with scanning rate of 15 - 600 amu, relative EMV mode, mass calibration with standard spectra autotune, MS source temperature of 230 °C and MS Quad temperature of 150 °C.

**Preparation of examples**

Table 1: Properties of the examples

| | | **CE 1** | **E 1** | **E 2** |
|---|---|---|---|---|
| $MFR_2$ | [g/10min] | 10.5 | 10.8 | 10.8 |
| HECO | [%] | 79.678 | 79.478 | 79.478 |
| PA | [%] | 0.190 | 0.190 | 0. 90 |
| OA | [%] | 0.100 | 0.100 | 0.100 |
| Calcium stearate | [%] | 0.032 | 0.032 | 0.032 |
| talc | [%] | 20.000 | 20.000 | 20.000 |
| deactivator A | [%] | - | 0.200 | - |
| deactivator 13 | [%] | - | - | 0.200 |
| total content volatile [VDA 277] | [μgC/g] | 155 | 74 | 57 |
| 2-methyl-1-propene [VDA 277] | [μgC/g] | 110 | 32 | 14 |
| HECO: heterophasic polypropylene copolymer, namely the commercial product BE170MO of Borealis ($MFR_2$ of 13 g/10 min; xylene soluble content of 15 wt.-%, ethylene content of 7 wt.-%<br>PA: phosphorous antioxidant, namely tris (2,4-di-*t*-butylphenyl) phosphite (CAS no 31570-04-4) [IRGAFOS 168]<br>PO: organic antioxidant, namely pentaerythrityl-tetrakis(3-(3',5'-di-tert. butyl-4-hydroxyphenyl)-propionate (CAS no 6683-19-8) [IRGANOX 1010]<br>deactivator A: organic metal deactivator, namely N,N'-bis (3(3',5'-di-tert. butyl-4'-hydroxyphenyl)propionyl) hydrazine [IRGANOX MD 1024]<br>deactivator B: organic metal deactivator B, namely 2,2'-oxamido bis-(ethyl-3-(3,5-di-tert. butyl-4-hydroxyphenyl)propionate) [Palmarole MDA. P. 11] | | | | |

**Claims**

1. Polymer composition comprising

(a) polypropylene (A),
(b) talc (B),
(c) phenolic antioxidants (C),
(d) organic metal deactivators (D), and
(e) optionally phosphorous antioxidants (E),

wherein the polypropylene (A) is a heterophasic propylene copolymer (A') comprising a polypropylene matrix ($A^1$) and an amorphous elastomer ($A^2$).

2. Polymer composition according to claim 1, wherein the composition comprises

(a) 1,000 to 550,000 ppm of talc (B),
(b) 100 to 5,000 ppm of phenolic antioxidants (C),
(c) 100 to 5,000 ppm of organic metal deactivators (D), and
(d) optionally 100 to 5,000 ppm of phosphorous antioxidants (E),

based on the composition.

3. Polymer composition according to claim 1 or 2, wherein the polymer composition comprises at least 50 wt.-% polypropylene.

4. Polymer composition according to anyone of the preceding claims, wherein the talc (B) comprises iron residues, preferably iron oxide (FeO) and/or iron silicate.

5. Polymer composition according anyone of the preceding claims, wherein the phenolic antioxidants (C) are sterically hindered phenolic antioxidants (C').

6. Polymer composition according anyone of the preceding claims, wherein the organic antioxidants (C) are phenolic antioxidants (C') comprising the residue of formula (I)

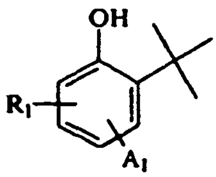

(I)

wherein
$R_1$ being located at the ortho- or meta-position to the hydroxyl-group and $R_1$ is $(CH_3)_3C$-, $CH_3$- or H, preferably $(CH_3)_3C$-, and
$A_1$ constitutes the remaining part of the phenolic antioxidant (C').

7. Polymer composition according to any one of the preceding claims, wherein the phenolic antioxidants (C') comprise at least one residue of formula (II)

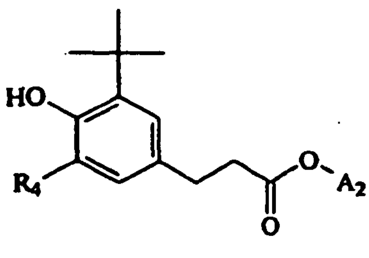

wherein
$R_4$ is $(CH_3)_3C$-, $CH_3$-, or H, preferably $(CH_3)_3C$-, and
$A_2$ constitutes the remaining part of the phenolic antioxidant (C').

8. Polymer composition according to any one of the preceding claims, wherein the organic metal deactivators (D) comprise at least one, preferably, two -C(O)-NH-groups.

**9.** Polymer composition according to any one of the preceding claims, wherein the organic metal deactivators (D) comprise at least one, preferably two, phenolic residues.

**10.** Polymer composition according to claim 9, wherein the organic metal deactivators (D) comprise the group of formula (IV)

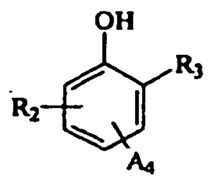

(IV)

wherein
$R_2$ being located at the ortho- or meta-position to the hydroxyl-group,
$R_2$ and $R_3$ are independently selected from the group consisting of $(CH_3)_3C$-, $CH_3$- or H-, preferably $(CH_3)_3C$-, and
$A_4$ constitutes the remaining part of organic metal deactivators (D) and comprises at least one, preferably, two -C(O)-NH- groups.

**11.** Polymer composition according to anyone of claims 8 to 10, wherein the two phenolic residues, preferably as defined in claim 10, are linked via a bridging group, wherein said group comprises two -C(O)-NH- groups.

**12.** Polymer composition according to any one of the preceding claims, wherein the organic metal deactivators (D) are selected from the group consisting of N,N'-bis (3(3',5'-di-tert. butyl-4'-hydroxyphenyl)propionyl) hydrazine (CAS-no 32687-78-8), 2,2'-oxamido bis-(ethyl-3-(3,5-di-tert. butyl-4-hydroxyphenyl)propionate) (CAS-no 70331-94-1), oxalyl bis(benzylidenehydrazide) (CAS-no 6629-10-3), 2,5-bis(2-(3-(3,5-di-tert. butyl-4-hydroxyphenyl) propionylamido) ethylamino) benzoquinone, tris(2-tert. butyl-4-thio(2'-methyl-4'-hydroxy-5'-tert. butyl)phenyl-5-methyl) phenylphosphite (CAS-no 36339-47-6), and decamethylene-dicarboxy-di-salicyloyl hydrazide (CAS-no 63245-38-5).

**13.** Use of the organic metal deactivators (D) as defined in anyone of the preceding claims to reduce the headspace emission according to VDA 277, preferably the headspace emission of 2-methyl-propene according to VDA 277, of a polymer.

**14.** Use according to claim 13, wherein the degradation of the organic antioxidants (C) as defined in anyone of the preceding claims is reduced.

**15.** Use according to claim 13 or 14, wherein the organic metal deactivators (D) are part of the polymer.

**16.** Use according to any one of the preceding claims 13 to 15, wherein the polymer comprises additionally talc (B), preferably talc as defined in any one of the preceding claims 1 to 12.

**17.** Use according to any one of the claims 13 to 16, wherein the organic metal deactivators (D) and the organic antioxidants (C) are part of a polymer composition as defined in anyone of the preceding claims 1 to 12.

**18.** Use according to any one of the claims 13 to 17, wherein the organic metal deactivators (D) reduce the headspace emission according to VDA 277, preferably the headspace emission of 2-methyl-propene according to VDA 277, of at least 30 % of a polymer composition, preferably of a polymer composition as defined in anyone of the claims 1 to 12, compared to the same polymer composition but without organic metal deactivators (D) as defined in anyone of the claims 1 to 12.

**19.** Article, preferably an automotive article or a back sheet of blister packaging, comprising the polymer composition according to anyone of the preceding claims 1 to 12.

## Patentansprüche

1. Polymerzusammensetzung umfassend

(a) Polypropylen (A),
(b) Talk (B),
(c) phenolische Antioxidantien (C),
(d) organische Metalldeaktivatoren (D), und
(e) optional Phosphor-Antioxidantien (E),

worin das Polypropylen (A) ein heterophasisches Propylene-Copolymer (A') ist, besagtes heterophasische Propylene-Copolymer (A') umfasst eine Polypropylenmatrix ($A^1$) und ein amorphes Elastomer ($A^2$).

2. Polymerzusammensetzung nach Anspruch 1, worin die Zusammensetzung

(a) 1.000 bis 550.000 ppm an Talk (B),
(b) 100 bis 5.000 ppm an phenolischen Antioxidantien (C),
(c) 100 bis 5.000 ppm an organischen Metalldeaktivatoren (D) und
(d) optional 100 bis 5.000 ppm an phosphorischen Antioxidantien (E),

basierend auf der Zusammensetzung, enthält.

3. Polymerzusammensetzung nach Anspruch 1 oder 2, worin die Polymerzusammensetzung mindenstens 50 Gew.-% Polypropylen umfasst.

4. Polymerzusammensetzung nach irgendeinem der vorhergehenden Ansprüche, worin der Talk (B) Eisenreste, vorzugsweise Eisenoxide (FeO) und/oder Eisensilikat umfasst.

5. Polymerzusammensetzung nach irgendeinem der vorhergehenden Ansprüche, worin die phenolischen Antioxidantien (C) sterisch gehinderte phenolische Antioxidantien (C')sind.

6. Polymerzusammensetzung nach irgendeinem der vorhergehenden Ansprüche, worin die organischen Antioxidantien (C) phenolische Antioxidantien (C') sind umfassend den Rest mit der Formel (I)

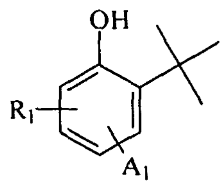

(I)

worin
$R_1$ an der ortho- oder metaposition zur Hydroxylgruppe lokalisiert ist und $R_1$ $(CH_3)_3C$-, $CH_3$- oder H, vorzugsweise $(CH_3)_3C$-, ist und
$A_1$ den verbleibenden Anteil des phenolischen Antioxidants (C') ausmacht.

7. Polymerzusammensetzung nach irgendeinem der vorhergehenden Ansprüche, worin die phenolischen Antioxidantien (C') mindestens einen Rest mit der Formel (II) umfassen

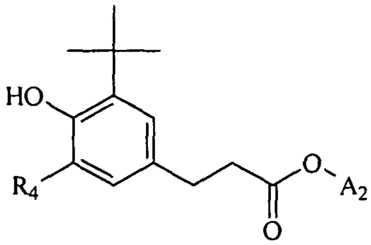

worin
$R_4$ $(CH_3)_3C$-, $CH_3$-, oder H, vorzugsweise $(CH_3)_3C$-, ist und
$A_2$ den verbleibenden Anteil des phenolischen Antioxidants (C') ausmacht.

**8.** Polymerzusammensetzung nach irgendeinem der vorhergehenden Ansprüche, worin die organischen Metalldeaktivatoren (D) mindestens eine, vorzugsweise zwei -C(O)-NH-Gruppe(n), umfassen.

**9.** Polymerzusammesetzung nach irgendeinem der vorhergehenden Ansprüche, worin die organischen Metalldeaktivatoren (D) mindestens einen, vorzugsweise zwei phenolische Rest(e), umfassen.

**10.** Polymerzusammensetzung nach Anspruch 9, worin die organischen Metalldeaktivatoren (D) die Gruppe mit der Formel (IV) umfassen

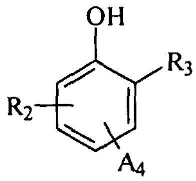

(IV)

worin
$R_2$ eine ortho- oder metaposition zur Hydroxylgruppe lokalisiert ist,
$R_2$ und $R_3$ unabhängig voneinander ausgewählt sind aus der Gruppe bestehend aus $(CH_3)_3C$-, $CH_3$- oder H-, vorzugsweise $(CH_3)_3C$-, und
$A_4$ den verbleibenden Teil der organischen Metalldeaktivatoren (D) ausmacht und Mindestens eine, vorzugsweise zwei, -C(O)-NH-Gruppe(n), umfasst.

**11.** Polymerzusammensetzung nach irgendeinem der vorhergehenden Ansprüche 8 bis 10, worin zwei phenolische Reste, vorzugsweise wie im Anspruch 10 definiert, über eine Brückengruppe verbunden sind, worin besagte Gruppe zwei -C(O)-NH-Gruppen umfasst.

**12.** Polymerzusammensetzung nach irgendeinem der vorhergehenden Ansprüche, worin die organischen Metalldeaktivatoren (D) ausgewählt sind aus der Gruppe bestehend aus N,N'-Bis (3(3',5'-di-tert. butyl-4'-hydroxylphenyl)propionylhydrazin (CAS-no 32687-78-8), 2,2'-Oxamido bis-(ethyl-3-(3,5-di-tert. butyl-4-hydroxyphenyl)propionat) (CAS-no 70331-94-1), Oxalyl bis(benzyliden hydrazit) (CAS-no 6629-10-3), 2,5-Bis(2-(3-(3,5-di-tert. butyl-4-hydroxyphenyl) propionylamido)ethylamido)benzochinon, Tris(2-tert. butyl-4-thio(2'-methyl 4'-hydroxy-5'-tert. butyl)phenyl-5-methyl) phenylphosphite (CAS-no 36339-47-6), und Decamethylene-dicarboxy-di-salicyloyl hydrazid (CAS-no 63245-38-5) ausgewählt sind.

**13.** Verwendung der organischen Metalldeaktivatoren (D) wie in irgendeinem der vorhergehenden Ansprüche definiert, um die Dampfraum-Emission nach VDA 277, vorzugsweise die Dampfraumemission von 2-Methylpropan nach VDA 277, eines Polymers zu reduzieren.

**14.** Verwendung nach Anspruch 13, worin der Abbau der organischen Antioxidantien (C), wie in irgendeinem der vorhergehenden Ansprüche definiert, reduziert ist.

**15.** Verwendung nach Anspruch 13 oder 14, worin die organischen Metalldeaktivatoren (D) Teil des Polymers sind.

**16.** Verwendung nach irgendeinem der Ansprüche 13 bis 15, worin das Polymer zusätzlich Talk (B), vorzugsweise einen Talk, wie in irgendeinem der Ansprüche 1 bis 12 definiert, umfasst.

**17.** Verwendung nach irgendeinem der Ansprüche 13 bis 16, worin die organischen Metalldeaktivatoren (D) und die organischen Antioxidantien (C) Teil einer Polymerzusammensetzung, wie in irgendeinem der vorhergehenden Ansprüche 1 bis 12 definiert, sind.

**18.** Verwendung nach irgendeinem der Ansprüche 13 bis 17, worin die organischen Metalldeaktivatoren die Dampfraumemission nach VDA 277, vorzugsweise die Dampfraumemission von 2-Methyl-propan nach VDA 277, um mindestens 30 % einer Polymerzusammensetzung, vorzugsweise einer Polymerzusammensetzung wie in irgendeinem der Ansprüche 1 bis 12 definiert, reduziert im Vergleich zu derselben Polymerzusammensetzung, aber ohne organische Metalldeaktivatoren (D), wie in irgendeinem der Ansprüche 1 bis 12, definiert.

**19.** Gegenstand, vorzugsweise ein Automobilgegenstand oder eine hintere Lage einer Blisterverpackung, umfassend die Polymerzusammensetzung nach irgeneinem der Ansprüche 1 bis 12.

## Revendications

**1.** Composition polymère comprenant

(a) du polypropylène (A),
(b) du talc (B),
(c) des antioxydants phénoliques (C),
(d) des désactivateurs de métaux organiques (D), et
(e) éventuellement des antioxydants phosphoreux (E),

dans laquelle le polypropylène (A) est un copolymère de propylène hétérophasique (A') comprenant une matrice de polypropylène ($A^1$) et un élastomère amorphe ($A^2$).

**2.** Composition polymère selon la revendication 1, ladite composition comprenant

(a) 1 000 à 550 000 ppm de talc (B),
(b) 100 à 5 000 ppm d'antioxydants phénoliques (C),
(c) 100 à 5 000 ppm de désactivateurs de métaux organiques (D), et
(d) éventuellement 100 à 5 000 ppm d'antioxydants phosphoreux (E), rapportés à la composition.

**3.** Composition polymère selon la revendication 1 ou 2, ladite composition polymère comprenant au moins 50 % en poids de polypropylène.

**4.** Composition polymère selon l'une quelconque des revendications précédentes, dans laquelle le talc (B) comprend des résidus ferreux, de préférence de l'oxyde de fer (FeO) et/ou du silicate de fer.

**5.** Composition polymère selon l'une quelconque des revendications précédentes, dans laquelle les antioxydants phénoliques (C) sont des antioxydants phénoliques stériquement empêchés (C').

**6.** Composition polymère selon l'une quelconque des revendications précédentes, dans laquelle les antioxydants organiques (C) sont des antioxydants phénoliques (C') comprenant le résidu de formule (I)

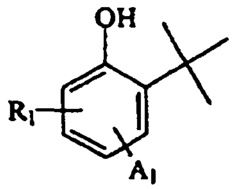

(I)

dans laquelle
$R_1$ étant situé en position ortho ou méta par rapport au groupe hydroxyle, $R_1$ représente $(CH_3)_3C$-, $CH_3$- ou H, de préférence $(CH_3)_3C$-, et
$A_1$ représente la partie restante de l'antioxydant phénolique (C').

**7.** Composition polymère selon l'une quelconque des revendications précédentes, dans laquelle les antioxydants phénoliques (C') comprennent au moins un résidu de formule (II)

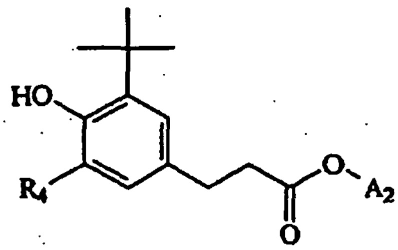

(II)

dans laquelle
$R_4$ représente $(CH_3)_3C$-, $CH_3$- ou H, de préférence $(CH_3)_3C$-, et
$A_2$ représente la partie restante de l'antioxydant phénolique (C').

**8.** Composition polymère selon l'une quelconque des revendications précédentes, dans laquelle les désactivateurs de métaux organiques (D) comprennent au moins un, de préférence deux, groupes -C(O)-NH-.

**9.** Composition polymère selon l'une quelconque des revendications précédentes, dans laquelle les désactivateurs de métaux organiques (D) comprennent au moins un, de préférence deux, résidus phénoliques.

**10.** Composition polymère selon la revendication 9, dans laquelle les désactivateurs de métaux organiques (D) comprennent le groupe de formule (IV)

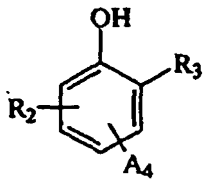

(IV)

dans laquelle
$R_2$ étant situé en position ortho ou méta par rapport au groupe hydroxyle, $R_2$ et $R_3$ sont sélectionnés indépendamment dans le groupe constitué par $(CH_3)_3C$-, $CH_3$- ou H, de préférence $(CH_3)_3C$-, et
$A_4$ représente la partie restante des désactivateurs de métaux organiques (D) et comprend au moins un, de préférence deux, groupes -C(O)-NH-.

**11.** Composition polymère selon l'une quelconque des revendications 8 à 10, dans laquelle les deux résidus phénoliques, de préférence tels que définis selon la revendication 10, sont liés via un groupe de pontage, ledit groupe comprenant deux groupes -C(O)-NH-.

**12.** Composition polymère selon l'une quelconque des revendications précédentes, dans laquelle les désactivateurs de métaux organiques (D) sont sélectionnés dans le groupe constitué par la N,N'-bis-(3(3',5-di-tert.butyl-4'-hydroxyphényl)propionyl)hydrazine (N° CAS 32687-78-8), le 2,2'-oxamido-bis-(éthyl-3-(3,5-di-tert.butyl-4-hydroxyphényl) propionate) (N° CAS 70331-94-1), l'oxalyl-bis(benzylidènehydrazide) (N° CAS 6629-10-3), la 2,5-bis(2-(3-(3,5-di-tert .butyl-4-hydroxyphényl)propionylamido)éthylamino)benzoquinone, le tris(2-tert.-butyl-4-thio(2'-méthyl-4'-hydroxy-5'-tert.butyl)phényl-5-méthyl)phénylphosphite (N° CAS 36339-47-6) et le décaméthylène-dicarboxy-di-salicyloylhydrazide (N° CAS 63245-38-5).

**13.** Utilisation des désactivateurs de métaux organiques (D) tels que définis dans l'une quelconque des revendications précédentes pour réduire l'émission en mode espace de tête selon VDA 277, de préférence l'émission en mode espace de tête de 2-méthyl-propène selon VDA 277, d'un polymère.

**14.** Utilisation selon la revendication 13, dans laquelle la dégradation des antioxydants organiques (C), tels que définis dans l'une quelconque des revendications précédentes, est réduite.

**15.** Utilisation selon la revendication 13 ou 14, dans laquelle les désactivateurs de métaux organiques (D) forment une partie du polymère.

**16.** Utilisation selon l'une quelconque des revendications 13 à 15, dans laquelle le polymère comprend en outre du talc (B), de préférence du talc tel que défini dans l'une quelconque des revendications 1 à 12 précédentes.

**17.** Utilisation selon l'une quelconque des revendications 13 à 16, dans laquelle les désactivateurs de métaux organiques (D) et les antioxydants organiques (C) forment une partie d'une composition polymère telle que définie dans l'une quelconque des revendications 1 à 12.

**18.** Utilisation selon l'une quelconque des revendications 13 à 17, dans laquelle les désactivateurs de métaux organiques (D) réduisent d'au moins 30 % l'émission en mode espace de tête selon VDA 277, de préférence l'émission en mode espace de tête de 2-méthyl-propène selon VDA 277, d'une composition polymère, de préférence d'une composition polymère telle que définie dans l'une quelconque des revendications 1 à 12, par comparaison à la même composition polymère mais sans désactivateurs de métaux organiques (D) tels que définis dans l'une quelconque des revendications 1 à 12.

**19.** Article, de préférence article du secteur automobile ou feuille support d'une plaquette thermoformée, comprenant la composition polymère selon l'une quelconque des revendications 1 à 12.